# EUROPEAN PATENT SPECIFICATION

(11) **EP 3 745 087 B1**
(45) Date of publication and mention of the grant of the patent: **18.10.2023**
(21) Application number: 20161311.4
(22) Date of filing: 05.03.2020
(51) Int. Cl.: G01C 21/32, G01C 21/00, G01C 21/36, G08G 1/01

(54) **METHOD, APPARATUS, AND COMPUTER PROGRAM PRODUCT FOR DETERMINING LANE LEVEL VEHICLE SPEED PROFILES**
VERFAHREN, VORRICHTUNG UND COMPUTERPROGRAMMPRODUKT ZUR BESTIMMUNG VON GESCHWINDIGKEITSPROFILEN VON FAHRZEUGEN AUF FAHRSPUREBENE
PROCÉDÉ, APPAREIL ET PRODUIT PROGRAMME INFORMATIQUE PERMETTANT DE DÉTERMINER DES PROFILS DE VITESSE D'UN VÉHICULE AU NIVEAU DES VOIES

(30) Priority: 07.03.2019 US 201916295059
(43) Date of publication of application: 02.12.2020
(73) Proprietor: HERE Global B.V., 5611 ZT Eindhoven (NL)
(72) Inventor: Fowe, James, Chicago, IL 60606 (US)
(74) Representative: Potter Clarkson

(56) References cited:
- US-A1- 2013 275 033
- US-A1- 2018 174 443

## Description

### TECHNOLOGICAL FIELD

An example embodiment of the present invention relates to determining lane level speed profiles, and more particularly, to using historical vehicle speed data to establish speed profiles on a lane level of granularity for road segments and for a series of road segments.

### BACKGROUND

Maps have been used for centuries for providing route geometry and geographical information. Conventional paper maps including static images of roadways and geographic features from a snapshot in history have given way to digital maps presented on computers and mobile devices. These digital maps can be updated and revised such that users have the most-current maps available to them each time they view a map hosted by a mapping service server. Digital maps can further be enhanced with dynamic information, such as vehicle speed profile information based on historical speed profiles of vehicles traveling among a road network.

Vehicle and traffic data that is provided on digital maps is generally based on crowd-sourced data from mobile devices or probe data. The traffic data is typically reflective of a collective group of mobile devices traveling along a road segment, and may be useful in vehicle navigation applications in order for a user to avoid heavy or slow traffic routes between an origin and a destination. However, dynamic computation of route optimization is computationally intensive and limited based on available processing power and the resultant periodic updates that can be processed.

US 2018/174443 A1 discloses a method to generate vehicle lane speed patterns. A method may include: receiving probe data from a plurality of probes, where the probe data includes probe data point location and heading; matching probe data points to a road segment to generate map-matched probe data points; analyzing the probe data relative to the road segment to establish a multi-modal distribution of probe data representing a distance of the probe data points from a pre-defined reference position of the road segment; matching the analyzed probe data points to individual lanes of the road segment, where peaks in the established multi-modal distribution are associated with individual lanes; and generating a vehicle lane speed pattern for each lane of the road segment based on a speed associated with probe data that is map-matched to the individual lanes. Corresponding apparatus and computer program products are also disclosed. US 2013/275033 A1 relates to determining lane speed profiles for each of a plurality of individual lanes of a multi-lane road section.

### BRIEF SUMMARY

A method, apparatus, and computer program product are provided in accordance with the independent claims. Preferred embodiments are set out in the dependent claims.

According to some embodiments, the clustering technique may include a k-means clustering algorithm, where the predetermined number of speed profiles is three. The processing circuitry configured to cluster the aggregated speeds on each lane into a predetermined number of speed profiles using the clustering technique may include processing circuitry configured to: stratify the trajectories of the plurality of probe apparatuses map-matched to the lanes of the road segment into a plurality of epochs; and cluster the aggregated speeds on each lane into a predetermined number of speed profiles using the clustering technique for each epoch, where the lane-level speed profile for the road segment includes lane-level speed profiles for each of the plurality of epochs.

Embodiments may include processing circuitry configured to generate a lane-level speed profile strand including a plurality of road segments in response to each of the plurality of road segments having a lane-level speed profile within a predefined similarity of one another. The processing circuitry configured to cluster the aggregated speeds on each lane into a predetermined number of speed profiles using the clustering technique may include causing the apparatus to: stratify the trajectories of the plurality of probe apparatuses map-matched to the lanes of the road segment into a plurality of epochs; and cluster the aggregated speeds on each lane into a predetermined number of speed profiles using the clustering technique for each epoch, where the lane-level speed profile for the road segment may include lane-level speed profiles for each of the plurality of epochs, and where the lane-level speed profile strand includes a plurality of road segments in response to each of the plurality of road segments having a lane-level speed profile within a predefined similarity of one another for the same epoch.

The processing circuitry configured to map-match trajectories of the plurality of probe apparatuses to lanes of a road segment of a road network may include processing circuitry configured to: identify a road segment corresponding to the probe trajectories based on latitude and longitude of the probe data points of the probe trajectories; determine a lateral position of the probe trajectories from a centerline of the identified road segment; cluster the probe trajectories according to available lanes of the identified road segment; and map-match the clustered trajectories to the available lanes. The processing circuitry configured to provide for at least one of navigational instructions or autonomous vehicle control based on the lane-level speed profile for the road segment may include processing circuitry configured to: identify a desired speed for the road segment based upon purpose of travel for a vehicle; identify a lane of the road segment corresponding to the desired speed for the road segment; and provide instructions directing travel of the vehicle in the identified lane.

Embodiments described herein may provide an apparatus including processing circuitry and at least one memory including computer program code. The at least one memory and the computer program code configured to, with the processing circuitry, cause the apparatus to at least: receive a plurality of probe data points, each probe data point received from a probe apparatus of a plurality of probe apparatuses, each probe apparatus including one or more sensors and being onboard a respective vehicle, where each probe data point includes location information associated with the respective probe apparatus, and where a sequence of probe data points from a respective probe apparatus defines a trajectory of the respective probe apparatus; map-match trajectories of the plurality of probe apparatuses to lanes of a road segment of a road network; determine, from each trajectory of the plurality of probe apparatuses map-matched to the lanes of the road segment, average path speeds along each lane of the road segment; aggregate average path speeds along each lane of the road segment; cluster the aggregated speeds on each lane into a predetermined number of speed profiles using a clustering technique; generate a lane-level speed profile for the road segment; and provide for at least one of navigational instruction or autonomous vehicle control based on the lane-level speed profile for the road segment. The clustering technique may include a k-means clustering algorithm, and the predetermined number of speed profiles may be three.

According to some embodiments, causing the apparatus to cluster the aggregated speeds on each lane into a predetermined number of speed profiles using the clustering technique may include causing the apparatus to: stratify the trajectories of the plurality of probe apparatuses map-matched to the lanes of the road segment into a plurality of epochs; and cluster the aggregated speeds on each lane into a predetermined number of speed profiles using the clustering technique for each epoch, where the lane-level speed profile for the road segment includes lane-level speed profiles for each of the plurality of epochs.

Embodiments of the apparatus may be caused to generate a lane-level speed profile strand including a plurality of road segments in response to each of the plurality of road segments having a lane-level speed profile within a predefined similarity of one another. Causing the apparatus to cluster the aggregated speeds on each lane into a predetermined number of speed profiles using the clustering technique may include causing the apparatus to: stratify the trajectories of the plurality of probe apparatuses map-matched to the lanes of the road segment into a plurality of epochs; and cluster the aggregated speeds on each lane into a predetermined number of speed profiles using the clustering technique for each epoch, where the lane-level speed profile for the road segment may include lane-level speed profiles for each of the plurality of epochs, and where the lane-level speed profile strand includes a plurality of road segments in response to each of the plurality of road segments having a lane-level speed profile within a predefined similarity of one another for the same epoch.

According to some embodiments, causing the apparatus to map-match trajectories of the plurality of probe apparatuses to lanes of a road segment of a road network may include causing the apparatus to: identify a road segment corresponding to the probe trajectories based on latitude and longitude of the probe data points of the probe trajectories; determine a lateral position of the probe trajectories from a centerline of the identified road segment; cluster the probe trajectories according to available lanes of the identified road segment; and map-match the clustered trajectories to the available lanes. Causing the apparatus to provide for at least one of navigational instruction or autonomous vehicle control based on the lane-level speed profile for the road segment may include causing the apparatus to identify a desired speed for the road segment based upon a purpose of travel for a vehicle; identify a lane of the road segment corresponding to the desired speed for the road segment; and provide instructions for directing travel of a vehicle in the identified lane.

Embodiments of the disclosure may provide a method including: receiving a plurality of probe data points, each probe data point received from a probe apparatus of a plurality of probe apparatuses, each probe apparatus including one or more sensors and being onboard a respective vehicle, where each probe data point includes location information associated with the respective probe apparatus, and where a sequence of probe data points from a respective probe apparatus defines a trajectory of the respective probe apparatus; map-matching trajectories of the plurality of probe apparatuses to lanes of a road segment of a road network; determining, from each trajectory of the plurality of probe apparatuses map-matched to the lanes of the road segment, average path speeds along each lane of the road segment; aggregating average path speeds along each lane of the road segment; clustering the aggregated speeds on each lane into a predetermined number of speed profiles using a clustering technique; generating a lane-level speed profile for the road segment; and providing for at least one of navigational instructions or autonomous vehicle control based on the lane-level speed profile for the road segment. The clustering technique may include a k-means clustering algorithm, and the predetermined number of speed profiles may be three.

According to some embodiments, clustering the aggregated speeds on each lane into a predetermined number of speed profiles using the clustering technique may include: stratifying the trajectories of the plurality of probe apparatuses map-matched to the lanes of the road segment into a plurality of epochs; and clustering the aggregated speeds on each lane into a predetermined number of speed profiles using the clustering technique for each epoch, where the lane-level speed profile for the road segment includes lane-level speed profiles for each of the plurality of epochs. Methods may include generating a lane-level speed profile strand including a plurality of road segments in response to the plurality of road segments having a lane-level speed profile within a predefined similarity of one another.

Clustering the aggregated speeds on each lane into a predetermined number of speed profiles using the clustering technique may include: stratifying the trajectories of the plurality of probe apparatuses map-matched to the lanes of the road segment into a plurality of epochs; and clustering the aggregated speeds on each lane into a predetermined number of speed profiles using the clustering technique for each epoch, where the lane-level speed profile for the road segment includes lane-level speed profiles for each of the plurality of epochs, and where the lane-level speed profile strand includes a plurality of road segments in response to each of the plurality of road segments having a lane-level speed profile within a predefined similarity of one another for the same epoch. Map-matching trajectories of the plurality of probe apparatuses to lanes of a road segment of a road network may include: identifying a road segment corresponding to the probe trajectories based on latitude and longitude of the probe data points of the probe trajectories; determining a lateral position of the probe trajectories from a centerline of the identified road segment; clustering the probe trajectories according to available lanes of the identified road segment; and map-matching the clustered trajectories to the available lanes.

Embodiments of the disclosure may provide an apparatus including: means for receiving a plurality of probe data points, each probe data point received from a probe apparatus of a plurality of probe apparatuses, each probe apparatus including one or more sensors and being onboard a respective vehicle, where each probe data point includes location information associated with the respective probe apparatus, and where a sequence of probe data points from a respective probe apparatus defines a trajectory of the respective probe apparatus; means for map-matching trajectories of the plurality of probe apparatuses to lanes of a road segment of a road network; means for determining, from each trajectory of the plurality of probe apparatuses to lanes of a road segment of a road network; means for determining, from each trajectory of the plurality of probe apparatuses map-matched to the lanes of the road segment, average path speeds along each lane of the road segment; means for aggregating average path speeds along each lane of the road segment; means for clustering the aggregated speeds on each lane into a predetermined number of speed profiles using a clustering technique; means for generating a lane-level speed profile for the road segment; and means for providing for at least one of navigational instructions or autonomous vehicle control based on the lane-level speed profile for the road segment. The clustering technique may include a k-means clustering algorithm, and the predetermined number of speed profiles may be three.

According to some embodiments, the means for clustering the aggregated speeds on each lane into a predetermined number of speed profiles using the clustering technique may include: means for stratifying the trajectories of the plurality of probe apparatuses map-matched to the lanes of the road segment into a plurality of epochs; and means for clustering the aggregated speeds on each lane into a predetermined number of speed profiles using the clustering technique for each epoch, where the lane-level speed profile for the road segment includes lane-level speed profiles for each of the plurality of epochs. An example apparatus may include means for generating a lane-level speed profile strand including a plurality of road segments in response to the plurality of road segments having a lane-level speed profile within a predefined similarity of one another.

The means for clustering the aggregated speeds on each lane into a predetermined number of speed profiles using the clustering technique may include: means for stratifying the trajectories of the plurality of probe apparatuses map-matched to the lanes of the road segment into a plurality of epochs; and means for clustering the aggregated speeds on each lane into a predetermined number of speed profiles using the clustering technique for each epoch, where the lane-level speed profile for the road segment includes lane-level speed profiles for each of the plurality of epochs, and where the lane-level speed profile strand includes a plurality of road segments in response to each of the plurality of road segments having a lane-level speed profile within a predefined similarity of one another for the same epoch. The means for map-matching trajectories of the plurality of probe apparatuses to lanes of a road segment of a road network may include: means for identifying a road segment corresponding to the probe trajectories based on latitude and longitude of the probe data points of the probe trajectories; means for determining a lateral position of the probe trajectories from a centerline of the identified road segment; means for clustering the probe trajectories according to available lanes of the identified road segment; and means for map-matching the clustered trajectories to the available lanes.

### BRIEF DESCRIPTION OF THE DRAWINGS

Having thus described example embodiments of the invention in general terms, reference will now be made to the accompanying drawings, which are not necessarily drawn to scale, and wherein:
Figure 1 illustrates a communications diagram in accordance with an example embodiment;
Figure 2 is a block diagram of an apparatus that may be specifically configured for establishing lane-level speed profiles for road segments and strands of road segments based on historical vehicle probe data in accordance with an example embodiment described herein;
Figure 3 illustrates a flowchart of the process of map matching according to an example embodiment described herein;
Figure 4 is a table of an example lane-level speed profile segment artifact generated according to an example embodiment described herein;
Figure 5 is a table of an example lane-level speed profile strand artifact generated according to an example embodiment described herein; and
Figure 6 is a flowchart of a method for establishing lane-level speed profiles for road segments and strands of road segments based on historical vehicle probe data according to an example embodiment described herein.

### DETAILED DESCRIPTION

Some embodiments of the present invention will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the scope of embodiments of the present invention as defined by the claims.

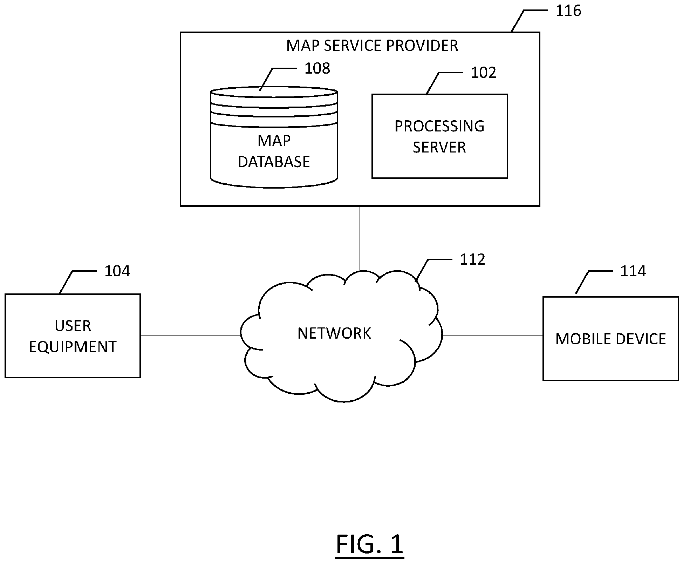

A method, apparatus, and computer program product are provided herein in accordance with an example embodiment for providing lane level speed profiles for roads in a road network based on historical vehicle trajectory data. FIG. 1 illustrates a communication diagram of an example embodiment of a system for implementing example embodiments described herein. The illustrated embodiment of FIG. 1 includes a map services provider system 116, a processing server 102 in data communication with a user equipment (UE) 104 and/or a geographic map database, e.g., map database 108 through a network 112, and one or more mobile devices 114. The mobile device 114 may be associated, coupled, or otherwise integrated with a vehicle, such as an advanced driver assistance system (ADAS), for example. Additional, different, or fewer components may be provided. For example, many mobile devices 114 may connect with the network 112. The map services provider 116 may include computer systems and networks of a system operator. The processing server 102 may include the map database 108, such as a remote map server. The network may be wired, wireless, or any combination of wired and wireless communication networks, such as cellular, Wi-Fi, internet, local area networks, or the like.

The user equipment 104 may include a mobile computing device such as a laptop computer, tablet computer, mobile phone, smart phone, navigation unit, personal data assistant, watch, camera, or the like. Additionally or alternatively, the user equipment 104 may be a fixed computing device, such as a personal computer, computer workstation, kiosk, office terminal computer or system, or the like. Processing server 102 may be one or more fixed or mobile computing devices. The user equipment 104 may be configured to access the map database 108 via the processing server 102 through, for example, a mapping application, such that the user equipment may provide navigational assistance to a user among other services provided through access to the map services provider 116.

The map database 108 may include node data, road segment data or link data, point of interest (POI) data, or the like. The map database 108 may also include cartographic data, routing data, and/or maneuvering data. According to some example embodiments, the road segment data records may be links or segments representing roads, streets, or paths, as may be used in calculating a route or recorded route information for determination of one or more personalized routes. The node data may be end points corresponding to the respective links or segments of road segment data. The road link data and the node data may represent a road network, such as used by vehicles, cars, trucks, buses, motorcycles, and/or other entities. Optionally, the map database 108 may contain path segment and node data records or other data that may represent pedestrian paths or areas in addition to or instead of the vehicle road record data, for example. The road/link segments and nodes can be associated with attributes, such as geographic coordinates, street names, address ranges, speed limits, turn restrictions at intersections, and other navigation related attributes, as well as POIs, such as fueling stations, hotels, restaurants, museums, stadiums, offices, auto repair shops, buildings, stores, parks, etc. The map database 108 can include data about the POIs and their respective locations in the POI records. The map database 108 may include data about places, such as cities, towns, or other communities, and other geographic features such as bodies of water, mountain ranges, etc. Such place or feature data can be part of the POI data or can be associated with POIs or POI data records (such as a data point used for displaying or representing a position of a city). In addition, the map database 108 can include event data (e.g., traffic incidents, construction activities, scheduled events, unscheduled events, etc.) also known as a context associated with the POI data records or other records of the map database 108.

The map database 108 may be maintained by a content provider e.g., a map services provider in association with a services platform. By way of example, the map services provider can collect geographic data to generate and enhance the map database 108. There can be different ways used by the map services provider to collect data. These ways can include obtaining data from other sources, such as municipalities or respective geographic authorities. In addition, the map services provider can employ field personnel to travel by vehicle along roads throughout the geographic region to observe features and/or record information about them, for example. Also, remote sensing, such as aerial or satellite photography, can be used to generate map geometries directly or through machine learning as described herein. Further, crowd-sourced data from vehicles traveling along the road links in the road network may provide information relating to their respective speed of travel, which may inform the map services provider with respect to lane level vehicle speed profiles. Such lane level vehicle speed profiles may be used during navigation or routing operations such that certain road links having slower vehicle speeds may be avoided, particularly when the slower vehicle speed profiles would cause a significant delay in a route while other routing options are available. Optionally, lane level vehicle speed profiles may be indicated to a user of the map service to inform the user of where traffic congestion exists, such that even if the user is not using routing to a destination, they may be able to avoid congested areas of the road network.

The map database 108 may be a master map database stored in a format that facilitates updating, maintenance, and development. For example, the master map database or data in the master map database can be in an Oracle spatial format or other spatial format, such as for development or production purposes. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems.

For example, geographic data may be compiled (such as into a platform specification format (PSF) format) to organize and/or configure the data for performing navigation-related functions and/or services, such as route calculation, route guidance, map display, speed calculation, distance and travel time functions, and other functions, by a navigation device, such as by user equipment 104, for example. The navigation-related functions can correspond to vehicle navigation, pedestrian navigation, or other types of navigation. While example embodiments described herein generally relate to vehicular travel along roads, example embodiments may be implemented for pedestrian travel along walkways, bicycle travel along bike paths, boat travel along maritime navigational routes, etc. The compilation to produce the end user databases can be performed by a party or entity separate from the map services provider. For example, a customer of the map services provider, such as a navigation device developer or other end user device developer, can perform compilation on a received map database in a delivery format to produce one or more compiled navigation databases.

As mentioned above, the server side map database 108 may be a master geographic database, but in alternate embodiments, a client side map database 108 may represent a compiled navigation database that may be used in or with end user devices (e.g., user equipment 104) to provide navigation and/or map-related functions. For example, the map database 108 may be used with the end user device 104 to provide an end user with navigation features. In such a case, the map database 108 can be downloaded or stored on the end user device (user equipment 104) which can access the map database 108 through a wireless or wired connection, such as via a processing server 102 and/or the network 112, for example.

In one embodiment, the end user device or user equipment 104 can be an in-vehicle navigation system, such as an ADAS, a personal navigation device (PND), a portable navigation device, a cellular telephone, a smart phone, a personal digital assistant (PDA), a watch, a camera, a computer, and/or other device that can perform navigation-related functions, such as digital routing and map display. An end user can use the user equipment 104 for navigation and map functions such as guidance and map display, for example, and for determination of one or more personalized routes or route segments based on one or more calculated and recorded routes, according to some example embodiments.

The processing server 102 may receive probe data from a mobile device 114. The mobile device 114 may include one or more detectors or sensors as a positioning system built or embedded into or within the interior of the mobile device 114. Alternatively, the mobile device 114 uses communications signals for position determination. The mobile device 114 may receive location data from a positioning system, such as a global positioning system (GPS), cellular tower location methods, access point communication fingerprinting, or the like. The server 102 may receive sensor data configured to describe a position of a mobile device, or a controller of the mobile device 114 may receive the sensor data from the positioning system of the mobile device 114. The mobile device 114 may also include a system for tracking mobile device movement, such as rotation, velocity, or acceleration. Movement information may also be determined using the positioning system. The mobile device 114 may use the detectors and sensors to provide data indicating a location of a vehicle. This vehicle data, also referred to herein as "probe data", may be collected by any device capable of determining the necessary information, and providing the necessary information to a remote entity. The mobile device 114 is one example of a device that can function as a probe to collect probe data of a vehicle.

More specifically, probe data (e.g., collected by mobile device 114) is representative of the location of a vehicle at a respective point in time and may be collected while a vehicle is traveling along a route. While probe data is described herein as being vehicle probe data, example embodiments may be implemented with pedestrian probe data, marine vehicle probe data, or non-motorized vehicle probe data (e.g., from bicycles, skate boards, horseback, etc.). According to the example embodiment described below with the probe data being from motorized vehicles traveling along roadways, the probe data may include, without limitation, location data, (e.g. a latitudinal, longitudinal position, and/or height, GPS coordinates, proximity readings associated with a radio frequency identification (RFID) tag, or the like), rate of travel, (e.g. speed), direction of travel, (e.g. heading, cardinal direction, or the like), device identifier, (e.g. vehicle identifier, user identifier, or the like), a time stamp associated with the data collection, or the like. The mobile device 114, may be any device capable of collecting the aforementioned probe data. Some examples of the mobile device 114 may include specialized vehicle mapping equipment, navigational systems, mobile devices, such as phones or personal data assistants, or the like.

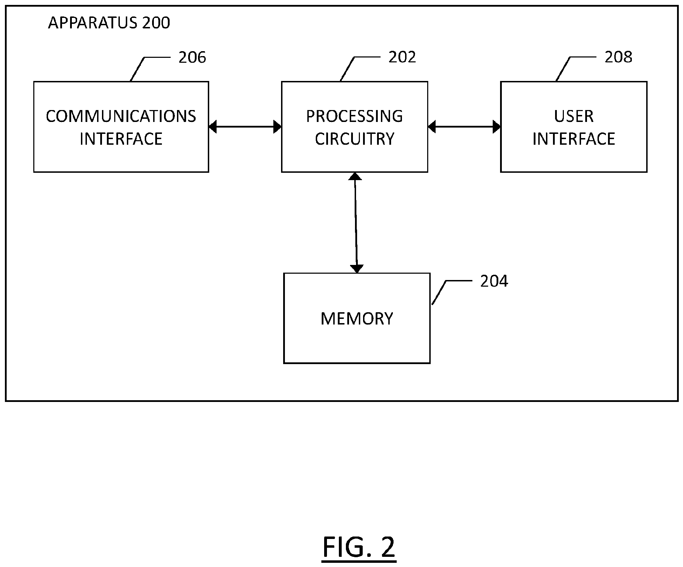

An example embodiment of a processing server 102 may be embodied in an apparatus as illustrated in FIG. 2. The apparatus, such as that shown in FIG. 2, may be specifically configured in accordance with an example embodiment of the present disclosure for generating lane-level speed profile data, determining the lane level speed profiles, and/or for using the lane-level speed profiles to efficiently traverse a network of roads. The apparatus may include or otherwise be in communication with a processing circuitry 202, a memory device 204, a communication interface 206, and a user interface 208. In some embodiments, the processing circuitry (and/or co-processors or any other processing circuitry assisting or otherwise associated with the processing circuitry) may be in communication with the memory device via a bus for passing information among components of the apparatus. The memory device may be non-transitory and may include, for example, one or more volatile and/or non-volatile memories. In other words, for example, the memory device may be an electronic storage device (for example, a computer readable storage medium) comprising gates configured to store data (for example, bits) that may be retrievable by a machine (for example, a computing device like the processing circuitry 202). The memory device may be configured to store information, data, content, applications, instructions, or the like, for enabling the apparatus to carry out various functions in accordance with an example embodiment of the present invention. For example, the memory device could be configured to buffer input data for processing by the processing circuitry. Additionally or alternatively, the memory device could be configured to store instructions for execution by the processing circuitry.

The processing circuitry 202 may be embodied in a number of different ways. For example, the processing circuitry may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processing circuitry may include one or more processing cores configured to perform independently. A multi-core processor may enable multiprocessing within a single physical package. Additionally or alternatively, the processing circuitry may include one or more processors configured in tandem via the bus to enable independent execution of instructions, pipelining and/or multithreading.

In an example embodiment, the processing circuitry 202 may be configured to execute instructions stored in the memory device 204 or otherwise accessible to the processing circuitry. Alternatively or additionally, the processing circuitry may be configured to execute hard coded functionality. As such, whether configured by hardware or software methods, or by a combination thereof, the processing circuitry may represent an entity (for example, physically embodied in circuitry) capable of performing operations according to an embodiment of the present invention while configured accordingly. Thus, for example, when the processing circuitry is embodied as an ASIC, FPGA or the like, the processing circuitry may be specifically configured hardware for conducting the operations described herein. Alternatively, as another example, when the processing circuitry is embodied as an executor of software instructions, the instructions may specifically configure the processing circuitry to perform the algorithms and/or operations described herein when the instructions are executed. However, in some cases, the processing circuitry may be a processor specific device (for example, a mobile terminal or a fixed computing device) configured to employ an embodiment of the present invention by further configuration of the processing circuitry by instructions for performing the algorithms and/or operations described herein. The processing circuitry may include, among other things, a clock, an arithmetic logic unit (ALU) and logic gates configured to support operation of the processing circuitry.

The apparatus 200 of an example embodiment may also include a communication interface 206 that may be any means such as a device or circuitry embodied in either hardware or a combination of hardware and software that is configured to receive and/or transmit data to/from a communications device in communication with the apparatus, such as to facilitate communications with one or more user equipment 104 or the like. In this regard, the communication interface may include, for example, an antenna (or multiple antennae) and supporting hardware and/or software for enabling communications with a wireless communication network. Additionally or alternatively, the communication interface may include the circuitry for interacting with the antenna(s) to cause transmission of signals via the antenna(s) or to handle receipt of signals received via the antenna(s). In some environments, the communication interface may alternatively or also support wired communication. As such, for example, the communication interface may include a communication modem and/or other hardware and/or software for supporting communication via cable, digital subscriber line (DSL), universal serial bus (USB) or other mechanisms.

The apparatus 200 may also include a user interface 208 that may, in turn be in communication with the processing circuitry 202 to provide output to the user and, in some embodiments, to receive an indication of a user input. As such, the user interface may include a display and, in some embodiments, may also include a keyboard, a mouse, a joystick, a touch screen, touch areas, soft keys, one or more microphones, a plurality of speakers, or other input/output mechanisms. In one embodiment, the processing circuitry may comprise user interface circuitry configured to control at least some functions of one or more user interface elements such as a display and, in some embodiments, a plurality of speakers, a ringer, one or more microphones and/or the like. The processing circuitry and/or user interface circuitry comprising the processor may be configured to control one or more functions of one or more user interface elements through computer program instructions (for example, software and/or firmware) stored on a memory accessible to the processing circuitry (for example, memory device 204, and/or the like).

Embodiments of the present disclosure may facilitate route guidance and navigation for manually driven vehicles, semi-autonomous vehicles, and fully autonomous vehicles. Embodiments provide insight into how vehicles are driven on different segments of road networks. For example, manually driven vehicles or vehicles with human drivers controlling the vehicle may drive along road segments at different speeds dependent upon numerous factors not limited to the speed limits of road segments. Embodiments described herein may generate a humanized driving profile where sub-link road segments or portions of a road segment are attributed speed profiles based on a cluster of probe vehicles' speeds. A cluster of probe vehicle speeds that move faster than an average speed may be deemed fast drivers, while probe vehicle speeds that move slower than an average speed may be deemed conservative or slow drivers, etc. Embodiments described herein take humanized driving habits to a new level by breaking down sub-links of road segments into lane-level granularity to generate lane-level speed profiles (LLSP). Historical probe data is used to obtain sub-link lane speeds of road segments, which may be processed to establish accurate speed-profiles for the sub links as average speeds will be generated per-lane and lane-level speed differentiation will be captured. Embodiments described herein provide a more accurate speed profile of a road segment by providing non-uniform speed profiles across the lanes of a multi-lane road segment within sub-links of the road segment.

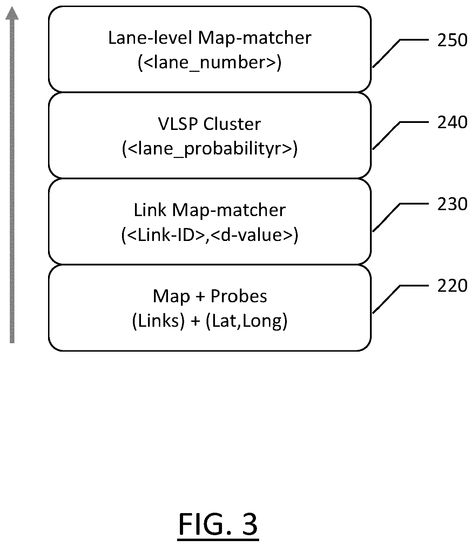

In order to generate the lane-level speed profiles described herein, historical probe data is first be map-matched on a granular level to establish a lane of travel of the probe trajectories. Figure 3 illustrates the map-matching process for example embodiments described herein. The historical probe data is used at 220 together with map data, which may be from map database 108 of map service provider 116. The road segments/links are in the stored map data, while the probe data includes latitude and longitude of the probe as it traversed a geographical region. The link map-matcher 230 identifies a road segment or link by "link-ID" closest to the latitude and longitude of the probe data point. A "d-value" is the displacement value of the latitude and longitude relative to a centerline of the identified link. At 240, a layer of abstraction is created over the map as the virtual lane speed profile to generate the lane probabilities of probe data points based on their lateral positions (d-value) relative to the link. These form the emission probabilities of a Hidden Markov Model (HMM) in which the Viterbi algorithm may be used to make inference of the most probable lane(s) of a probe trajectory. Based on the most probable lane(s), the probe trajectory is map-matched on a lane level to a lane as it traverses the road segment at 250.

Most multi-lane roads typically have a difference in speeds across the lanes, which may vary by road segment sub-link and by epochs including time of day, day of week, season of the year, etc. Some road segments include truck-specific lanes that are slower than the rest of the lanes or restrictions that limit truck traffic to one or more lanes that inherently slow those traffic lanes. Further, bus lanes may generally be slower than free-flowing traffic. Some highways include speed minimums for different lanes to promote traffic stratification. However, these lane-level speed distinctions are not typically translated to route guidance and autonomous vehicle control, where vehicles could benefit from understanding the lane-level speed profile for a road segment along their route.

Embodiments provided herein describe methods and algorithms to use historical probe vehicle speeds to generate lane-level speed profiles for road segments. Two basic artifacts may be generated from historical probe data that can be valuable tools in route guidance and autonomous or semi-autonomous vehicle control. The artifacts include lane-level speed profile segments and lane-level speed profile strands.

Lane-level speed profile segments may be generated for every lane on any link/road-segment for different epochs. Using historical probe data from a period of time, such as a year's worth of historical probe data, the historical probe trajectories may be map-matched using a lane-level map matcher, which may be embodied by, for example, processing server 102 of map service provider 116. Clustering techniques may then be applied to the map-matched probe trajectories, such as a k-means clustering technique, to obtain the various speed profiles for the different lanes at different times of day/days of week/times of year, etc. Various numbers of clusters can be chosen for the clustering techniques. Using three clusters (e.g., k=3) may provide reliable and repeatable clustering of three levels of speeds on the lanes of a road segment.

Using three segments provides a fast cluster indicating the general average speed at which fast drivers drive on the specific lane of the road segment or sub-link, while the lowest speed cluster will indicate the slowest moving cluster on the lane of the road segment or sub-link. The slowest moving cluster corresponds to the most conservative drivers or slowest recommended driving speed for a lane of a road segment. These three speed profiles of the three clusters allow for autonomous or semi-autonomous vehicles to select a travel lane based on a desired speed of travel.

The desired speed of travel may differ depending upon the mission of the vehicle and the desired energy consumption of the vehicle. For example, if a vehicle is transporting passengers, the highest speed lane of travel may not be the most desirable from a comfort standpoint, whereas if the passengers are trying to reach a destination by a particular time, the slowest lane of travel may not be sufficient to meet the desired time of arrival. The generated lane-level speed profile segment artifact for every lane on any road segment/ sub-link for different epochs may benefit route guidance, semi-autonomous and autonomous vehicles, high-definition (HD) maps, transportation departments (DOTs), etc.

In addition to lane-level speed profile segments, lane-level speed profile strands may be generated to enhance route guidance or control of semi-autonomous or autonomous vehicles. The lane-level speed profile segments may be summarized by producing connected, long strands of road segments so far as the average speed of all the lanes of these contiguous segments are similar. The strands break where there is a significant change in average speed on any of the lanes of a road segment. This provides a lighter weight data set that can be used for real-time navigation or traffic processing and may benefit both drivers/passengers and municipalities/DOTs in strategic traffic analysis.

Embodiments described herein may further stratify probe data based on various factors. For example, probe data may be stratified based on whether the probe data is from a human-driven vehicle or from an autonomously-driven vehicle, the type of vehicle (e.g., car, bus, truck, etc.), or various other classifications such that the probe data may be parsed according to the source of the probe data in order to more accurately define lane-level speeds according to the source.

Embodiments of the present disclosure capture historical speed profiles of road networks at the highest form of granularity by obtaining the average speed per lane, per time epoch, for various road segments or strands of road segments. Historically, vehicle locationing means were error prone with accuracy insufficient to define a lane in which a vehicle is traveling. Using the disclosed lane-level map matching, vehicle probe data may be matched to a lane of travel, thereby providing an opportunity to generate the lane-level speed profiles and the artifacts described above. Embodiments provided herein define the lane-level speed profile artifacts along with how they are generated and use these artifacts to facilitate route guidance and autonomous vehicle control. Lane-level speed profile segments and lane-level speed profile strands can be published by, for example, map service provider 116, to various customers depending upon the use case.

Lane-level speed profiles may be generated based on analysis of historical vehicle probe data. This historical vehicle probe data may be from a rolling time window, such as the trailing year or years, or may be based on a period of months. The volume of data available may influence the length of the period over which historical data is gathered, such that a more frequently traveled road segment or network of roads may use a shorter period than a road segment or network of roads that is infrequently traveled. Further, the period may be limited based on infrastructure changes that may preclude accurate vehicle probe data from being gathered during a specific period of time or prior to a time after which the road infrastructure changed.

Using the historical vehicle probe data, a filtering technique may be applied to eliminate outlier data that may remove erroneous vehicle probe trajectories from consideration, such as erroneous speeds or speed profiles that do not satisfy a logic test (e.g., speeds in excess of vehicle capabilities). A path-processing algorithm may be applied to the probe trajectories of the historical probe data to convert the trajectories to average path speeds on each lane of the road segment along which they are traveling. According to the invention, a clustering technique is applied to the aggregated speeds on each lane to segment the data into a plurality of speed profiles. For example, using a k-means clustering algorithm with a value of k=3 the aggregated speeds on each lane are clustered into three speed profiles. This generates the lane-level speed profile segments. A stranding algorithm may be applied to combine lane-level speed profile segments where all lanes have similar mid-cluster speed averages.

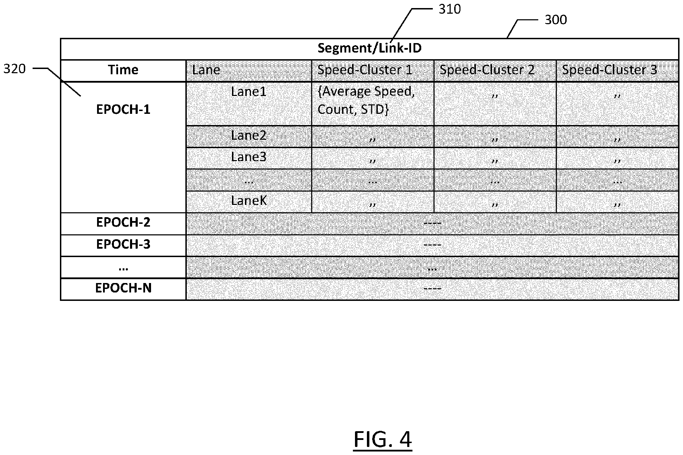

Figure 4 is a table of an example lane-level speed profile segment artifact generated according to the methods described above. The table 300 may be representative of an artifact generated for a specific road segment or link, identified by the segment/link-ID 310. As shown, the first column "Time" reflects different epochs 320 established from the historical probe data. Epochs may be predefined, such as for hours of the day, days of the week, times of the year, etc. Epochs may further be established as periods of time on days of the week for a month. For example, epochs may include Monday through Sunday, at thirty-minute intervals. The epochs may further be broken down by month or season, for example.

However, epochs may also be established based on the historical probe data. For example, after map matching of probe trajectories to road lanes using the lane-level map matcher, path processing may establish differences in average path speeds for one or more lanes that fluctuate over time. This may be established based on average speeds established for periods of time (e.g., thirty-minute intervals) and determining variance based on standard deviation of the averages over the periods. Such a method may establish epochs that are not conventionally considered. For example, road segments near an industrial park may experience fluctuations in traffic volumes and speeds at odd times, such as when a "third shift" begins or ends. While typical epochs may consider "rush hour" times, such as between 7am and 9am and between 4pm and 6pm, identifying epochs based on analysis of average speeds may inform new epochs that should be considered for inclusion as separate elements in the table of Figure 4.

Each epoch, regardless of how established, may include an identification of each lane of the road segment. For each lane, the clustered speed profiles may each be represented by a "speed-cluster" column. In the illustrated embodiment of Figure 4, there are three speed clusters (e.g., k=3). For each lane and each speed cluster, an average speed is identified, along with a count of trajectories that contributed to that average speed calculation, and the standard deviation among those trajectories. This provides an indication of the volume of traffic on each lane that are fast drivers, slow drivers, or in-between. This information may be used by a map data service provider 116 to generate route guidance appropriate for a particular user and their conventional driving speed. This information may further be used by autonomous or semi-autonomous vehicles to establish an appropriate lane of the road segment for the vehicle to travel in based on a desired speed of the vehicle for the road segment.

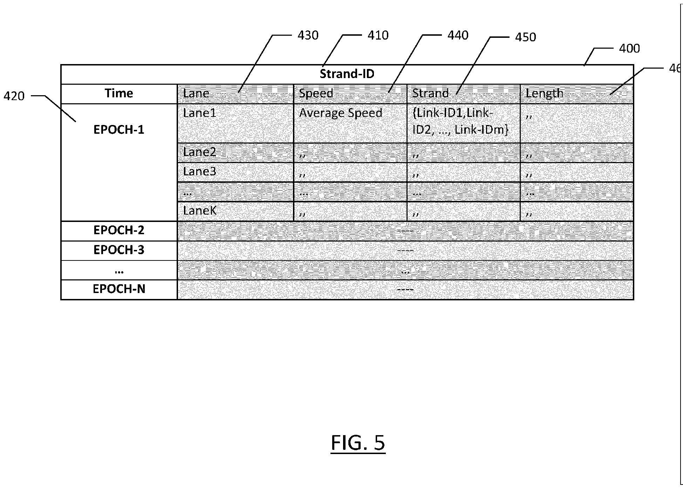

Figure 5 depicts a table 400 representing the lane-level speed profile strand artifact. As shown, the strand artifact is identified by the strand ID 410. As with the segment artifact, the probe data is segmented using time according to the different epochs 420. For each epoch, each lane of the strand is identified 430. For each lane, an average speed is established 440, while the strand is defined by the link/segment identifiers that make up the strand in the "strand" column 450. The length of the strand may be identified in column 460, which represents the combined length of the segments identified in 450. Strands may be of different lengths for different epochs including different road segments as vehicle speed profiles may change with time in different regions of a road network. Strands identify consistency between road segments, such that strands may be prevalent along stretches of roads with some consistency between features, which may be reflected in the vehicle speed profiles among the lanes of the road segments. Road segments may be combined into a strand in response to their speed profiles for a particular epoch being within a predefined degree of similarity. For example, if the speed profiles for all of the lanes of a first segment are within a predefined percentage of the speed profiles for all of the lanes of a second segment, the segments may be combined as a strand for the epoch. The percentage may be on the order of five to ten percent, for example, as consistency between the segments of a strand is fundamental to creating lane-level speed profile strands.

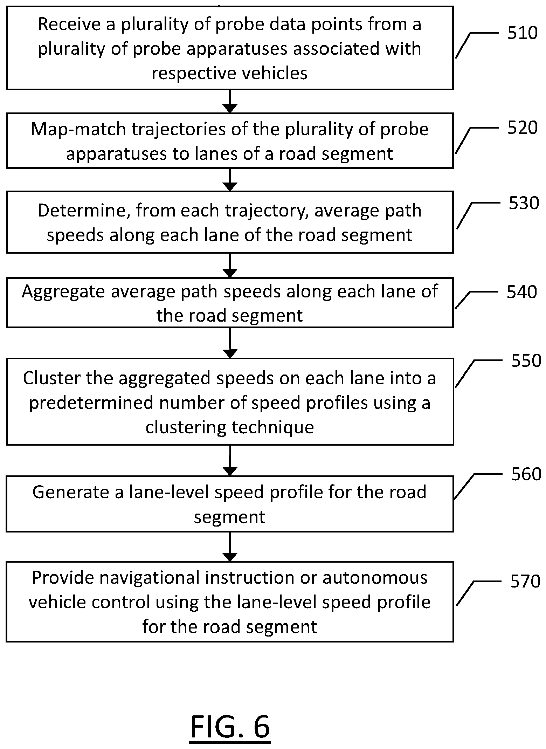

Figure 6 illustrates a flowchart depicting a method according to example embodiments of the present invention. It will be understood that each block of the flowchart and combination of blocks in the flowchart may be implemented by various means, such as hardware, firmware, processor, circuitry, and/or other communication devices associated with execution of software including one or more computer program instructions. For example, one or more of the procedures described above may be embodied by computer program instructions. In this regard, the computer program instructions which embody the procedures described above may be stored by a memory device 204 of an apparatus employing an embodiment of the present invention and executed by a processing circuitry 202 of the apparatus. As will be appreciated, any such computer program instructions may be loaded onto a computer or other programmable apparatus (for example, hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions that execute on the computer or other programmable apparatus provide operations for implementing the functions specified in the flowchart blocks.

Accordingly, blocks of the flowcharts support combinations of means for performing the specified functions and combinations of operations for performing the specified functions for performing the specified functions. It will also be understood that one or more blocks of the flowcharts, and combinations of blocks in the flowcharts, can be implemented by special purpose hardware-based computer systems that perform the specified functions, or combinations of special purpose hardware and computer instructions.

Figure 6 illustrates a flowchart of a method according to an example embodiment of the present invention for establishing lane-level speed profiles for road segments and strands of road segments based on historical vehicle probe data. As shown, a plurality of probe data points are received from a plurality of probe apparatuses associated with respective vehicles at 510. These probe data points may be retrieved from a database, such as map database 108 of map service provider 116. The trajectories of the plurality of probe apparatuses may be map-matched to lanes of a road segment as shown at 520. This may be performed, for example, by processing server 102 of map service provider 116. From each trajectory, average path speeds along each lane of the road segment may be determined at 530, which may also be performed by processing server 102 of map service provider 116. Speeds may be aggregated and the aggregated speeds on each lane may be clustered into a predetermined number of speed profiles using a clustering technique. The average path speeds along each lane of the road segment may be aggregated at 540, while the aggregated speeds along each lane are clustered at 550 into a predetermined number of speed profiles using a clustering technique. At 560, a lane-level speed profile for the road segment is generated. Navigational instruction or autonomous vehicle control is provided at 570 using the lane-level speed profile for the road segment.

In an example embodiment, an apparatus for performing the method of Figure 11 above may comprise a processor (e.g., the processing circuitry 202) configured to perform some or each of the operations (510-570) described above. The processing circuitry may, for example, be configured to perform the operations (510-570) by performing hardware implemented logical functions, executing stored instructions, or executing algorithms for performing each of the operations. Alternatively, the apparatus may comprise means for performing each of the operations described above. In this regard, according to an example embodiment, examples of means for performing operations 510-570 may comprise, for example, the processing circuitry 202 and/or a device or circuit for executing instructions or executing an algorithm for processing information as described above.

Many modifications and other examples of the disclosures set forth herein will come to mind to one skilled in the art to which these disclosures pertain having the benefit of the teachings presented in the foregoing descriptions and the associated drawings. Therefore, it is to be understood that the disclosures are not to be limited to the specific examples disclosed and that modifications and other examples are intended to be included within the scope of the appended claims. The invention is defined by the claims.

## Claims

1. A mapping system (200) comprising:
a memory (204) comprising map data; and
processing circuitry (202) configured to:
receive a plurality of probe data points, each probe data point received from a probe apparatus of a plurality of probe apparatuses, each probe apparatus comprising one or more sensors and being onboard a respective vehicle, wherein each probe data point comprises location information associated with the respective probe apparatus, and wherein a sequence of probe data points from a respective probe apparatus defines a trajectory of said respective probe apparatus;
map-match trajectories of the plurality of probe apparatuses to lanes of a road segment of a road network;
determine, from each trajectory of the plurality of probe apparatuses map-matched to the lanes of the road segment, an average path speed for each trajectory along each lane of the road segment;
aggregate average path speeds along each lane of the road segment;
for each lane, cluster the aggregated average speeds along the lane to obtain a predetermined number of speed profiles using a clustering technique, each speed profile for each respective lane being associated with a same epoch;
generate a lane-level speed profile for the road segment; and
provide for at least one of navigational instructions or autonomous vehicle control based on the lane-level speed profile for the road segment.

2. The mapping system (200) of claim 1, further comprising processing circuitry configured to:
stratify the trajectories of the plurality of probe apparatuses map-matched to the lanes of the road segment into a plurality of epochs, wherein the lane-level speed profile for the road segment comprises lane-level speed profiles for each of the plurality of epochs.

3. The mapping system (200) of claim 1, wherein the processing circuitry is further configured to:
generate a lane-level speed profile strand comprising a plurality of road segments in response to each of the plurality of road segments having a lane-level speed profile within a predefined similarity of one another.

4. The mapping system (200) of claim 1, wherein the processing circuitry configured to map-match trajectories of the plurality of probe apparatuses to lanes of a road segment of a road network comprises processing circuitry configured to:
identify a road segment corresponding to the probe trajectories based on latitude and longitude of the probe data points of the probe trajectories;
determine a lateral position of the probe trajectories from a centerline of the identified road segment;
cluster the probe trajectories according to available lanes of the identified road segment; and
map-match the clustered trajectories to the available lanes.

5. The mapping system (200) of claim 1, wherein the clustering technique comprises a k-means clustering algorithm, and wherein the predetermined number of speed profiles is three.

6. The mapping system (200) of claim 3 further comprising processing circuitry configured to:
stratify the trajectories of the plurality of probe apparatuses map-matched to the lanes of the road segment into a plurality of epochs, wherein the lane-level speed profile for the road segment comprises lane-level speed profiles for each of the plurality of epochs, and wherein the lane-level speed profile strand comprises a plurality of road segments in response to each of the plurality of road segments having a lane-level speed profile within a predefined similarity of one another for the same epoch.

7. The mapping system (200) of claim 1, wherein the processing circuitry configured to provide for at least one of navigational instructions or autonomous vehicle control based on the lane-level speed profile for the road segment comprises processing circuitry configured to:
identify a desired speed for the road segment based upon purpose of travel for a vehicle;
identify a lane of the road segment corresponding to the desired speed for the road segment; and
provide instructions directing travel of a vehicle in the identified lane.

8. A computer-implemented method comprising:
receiving (510) a plurality of probe data points, each probe data point received from a probe apparatus of a plurality of probe apparatuses, each probe apparatus comprising one or more sensors and being onboard a respective vehicle, wherein each probe data point comprises location information associated with the respective probe apparatus, and wherein a sequence of probe data points from a respective probe apparatus defines a trajectory of said respective probe apparatus;
map-matching (520) trajectories of the plurality of probe apparatuses to lanes of a road segment of a road network;
determining (530), from each trajectory of the plurality of probe apparatuses map-matched to the lanes of the road segment, an average path speed for each trajectory along each lane of the road segment;
aggregating (540) average path speeds along each lane of the road segment;
for each lane, clustering (550) aggregated speeds along the lane to obtain a predetermined number of speed profiles using a clustering technique, each speed profile for each respective lane being associated with a same epoch;
generating (560) a lane-level speed profile for the road segment; and
providing (570) for at least one of navigational instructions or autonomous vehicle control based on the lane-level speed profile for the road segment.

9. The method of claim 8, wherein the clustering (550) technique comprises a k-means clustering algorithm, and wherein the predetermined number of speed profiles is three.

10. The method of claim 8, further comprising:
stratifying the trajectories of the plurality of probe apparatuses map-matched to the lanes of the road segment into a plurality of epochs, wherein the lane-level speed profile for the road segment comprises lane-level speed profiles for each of the plurality of epochs.

11. The method of claim 8, further comprising:
generating (560) a lane-level speed profile strand comprising a plurality of road segments in response to each of the plurality of road segments having a lane-level speed profile within a predefined similarity of one another.

12. The method of claim 11, further comprising:
stratifying the trajectories of the plurality of probe apparatuses map-matched to the lanes of the road segment into a plurality of epochs, wherein the lane-level speed profile for the road segment comprises lane-level speed profiles for each of the plurality of epochs, and wherein the lane-level speed profile strand comprises a plurality of road segments in response to each of the plurality of road segments having a lane-level speed profile within a predefined similarity of one another for the same epoch.

13. The method of claim 8, wherein map-matching (520) trajectories of the plurality of probe apparatuses to lanes of a road segment of a road network comprises:
identifying a road segment corresponding to the probe trajectories based on latitude and longitude of the probe data points of the probe trajectories;
determining a lateral position of the probe trajectories from a centerline of the identified road segment;
clustering (550) the probe trajectories according to available lanes of the identified road segment; and
map-matching the clustered trajectories to the available lanes.

14. The method of claim 8, wherein providing (570) for at least one of navigational instructions or autonomous vehicle control based on the lane-level speed profile for the road segment comprises:
identifying a desired speed for the road segment based upon purpose of travel for a vehicle;
identifying a lane of the road segment corresponding to the desired speed for the road segment; and
providing instructions directing travel of a vehicle in the identified lane.

15. A computer program product comprising instructions which, when the program is executed by a computer, cause the computer to carry out the method of any of claims 8-14.

## Patentansprüche

1. Ein Kartierungssystem (200), das Folgendes umfasst:
einen Speicher (204) mit Kartendaten; und
eine Verarbeitungsschaltung (202), die konfiguriert ist, um:
eine Vielzahl von Sondendatenpunkten zu empfangen, wobei jeder Sondendatenpunkt von einer Sondiervorrichtung einer Vielzahl von Sondiervorrichtungen empfangen wird, wobei jede Sondiervorrichtung einen oder mehrere Sensoren umfasst und sich an Bord eines jeweiligen Fahrzeugs befindet, wobei jeder Sondendatenpunkt Ortsinformationen umfasst, die mit der jeweiligen Sondiervorrichtung verbunden sind, und wobei eine Sequenz von Sondendatenpunkten von einer jeweiligen Sondiervorrichtung eine Trajektorie der jeweiligen Sondiervorrichtung definiert;
Zuordnen von Trajektorien der Vielzahl von Sondenvorrichtungen zu Fahrspuren eines Straßenabschnitts eines Straßennetzes;
Bestimmen einer durchschnittlichen Weggeschwindigkeiten für jede Trajektorie entlang jeder Spur des Straßenabschnitts aus jeder Trajektorie der Vielzahl von Sondenvorrichtungen, die den Spuren des Straßenabschnitts zugeordnet sind;
Aggregieren der durchschnittlichen Weggeschwindigkeiten entlang jeder Spur des Straßenabschnitts;
für jede Spur die aggregierten Durchschnittsgeschwindigkeiten entlang der Spur zu clustern, um eine vorbestimmte Anzahl von Geschwindigkeitsprofilen unter Verwendung einer Clustering-Technik zu erhalten, wobei jedes Geschwindigkeitsprofil für jede jeweilige Spur mit derselben Epoche verbunden ist;
Erzeugen eines Geschwindigkeitsprofils auf Fahrspur-Ebene für den Straßenabschnitt; und
Zurverfügungstellung mindestens einer Navigationsanweisung oder einer autonomen Fahrzeugsteuerung auf der Grundlage des Fahrspur-Geschwindigkeitsprofils für den Straßenabschnitt.

2. Das Kartierungssystem (200) nach Anspruch 1 umfasst ferner eine Verarbeitungsschaltung, der so konfiguriert ist, dass er:
die Trajektorien der Vielzahl von Sondenvorrichtungen, die den Fahrspuren des Straßensegments zugeordnet sind, in eine Vielzahl von Epochen schichtet, wobei das Geschwindigkeitsprofil auf Fahrspur-Ebene für den Straßenabschnitt Geschwindigkeitsprofile auf Fahrspur-Ebene für jede der Vielzahl von Epochen umfasst.

3. Das Kartierungssystem (200) nach Anspruch 1, wobei die Verarbeitungsschaltung ferner konfiguriert ist, um:
ein Fahrspur-Geschwindigkeitsprofilstrang zu erzeugen, der eine Vielzahl von Straßenabschnitten umfasst, als Reaktion darauf, dass jedes der Vielzahl von Straßenabschnitten ein Fahrspur-Geschwindigkeitsprofil innerhalb einer vordefinierten Ähnlichkeit zueinander aufweist.

4. Das Kartierungssystem (200) nach Anspruch 1, wobei die Verarbeitungsschaltung, die so konfiguriert ist, dass sie die Trajektorien der mehreren Sondenvorrichtungen den Fahrspuren eines Straßenabschnitts eines Straßennetzes zuordnet, eine Verarbeitungsschaltung umfasst, die so konfiguriert ist, dass sie:
Identifizieren eines Straßenabschnitts, der den Sondentrajektorien entspricht, basierend auf dem Breitengrad und Längengrad der Sondendatenpunkte der Sondentrajektorien;
Bestimmen einer seitlichen Position der Sondentrajektorien von einer Mittellinie des identifizierten Straßenabschnitts;
Clustern der Sondentrajektorien gemäß den verfügbaren Fahrspuren des identifizierten Straßenabschnitts; und
Zuordnen der geclusterten Trajektorien zu den verfügbaren Fahrspuren.

5. Das Kartierungssystem (200) nach Anspruch 1, wobei die Clustering-Technik einen k-Mittelwert-Clustering-Algorithmus umfasst, und wobei die vorbestimmte Anzahl von Geschwindigkeitsprofilen drei ist.

6. Das Kartierungssystem (200) nach Anspruch 3 umfasst ferner eine Verarbeitungsschaltung, der so konfiguriert ist, dass er:
Stratifizieren der Trajektorien der Vielzahl von Sondenvorrichtungen, die den Fahrspuren des Straßensegments zugeordnet sind, in eine Vielzahl von Epochen, wobei das Fahrspur-Geschwindigkeitsprofil für den Straßenabschnitt Fahrspur-Geschwindigkeitsprofile für jede der Vielzahl von Epochen umfasst, und wobei der Fahrspur-Geschwindigkeitsprofilstrang eine Vielzahl von Straßenabschnitten als Reaktion darauf umfasst, dass jedes der Vielzahl von Straßenabschnitten ein Fahrspur-Geschwindigkeitsprofil innerhalb einer vordefinierten Ähnlichkeit zueinander für dieselbe Epoche aufweist.

7. Kartierungssystem (200) nach Anspruch 1, wobei die Verarbeitungsschaltung, die so konfiguriert ist, dass sie auf der Grundlage des Geschwindigkeitsprofils auf Fahrspurniveau für das Straßensegment Navigationsanweisungen und/oder eine autonome Fahrzeugsteuerung bereitstellt, eine Verarbeitungsschaltung umfasst, die so konfiguriert ist, dass sie:
eine gewünschte Geschwindigkeit für den Straßenabschnitt basierend auf dem Fahrtzweck eines Fahrzeugs identifiziert;
eine Fahrspur des Straßenabschnitts identifiziert, die der gewünschten Geschwindigkeit für das Straßensegment entspricht; und
Anweisungen bereitstellt, die die Fahrt eines Fahrzeugs auf der identifizierten Fahrspur steuern.

8. Computer-implementiertes Verfahren, das Folgendes umfasst:
Empfangen (510) einer Vielzahl von Sondendatenpunkten, wobei jeder Sondendatenpunkt von einer Sondiervorrichtung einer Vielzahl von Sondiervorrichtungen empfangen wird, wobei jede Sondiervorrichtung einen oder mehrere Sensoren umfasst und sich an Bord eines jeweiligen Fahrzeugs befindet, wobei jeder Sondendatenpunkt Ortsinformationen umfasst, die mit der jeweiligen Sondiervorrichtung verbunden sind, und wobei eine Sequenz von Sondendatenpunkten von einer jeweiligen Sondiervorrichtung eine Trajektorie der jeweiligen Sondiervorrichtung definiert;
Karten-Angleichung (520) der Vielzahl von Sondenvorrichtungen zu Fahrspuren eines Straßenabschnitts eines Straßennetzes;
Bestimmen (530) einer durchschnittlichen Weggeschwindigkeiten für jede Trajektorie entlang jeder Spur des Straßenabschnitts aus jeder Trajektorie der Vielzahl von Sondenvorrichtungen, die den Spuren des Straßenabschnitts zugeordnet sind;
Aggregieren (540) der durchschnittlichen Weggeschwindigkeiten entlang jeder Spur des Straßenabschnitts;
für jede Fahrspur, Clustern (550) der aggregierten Durchschnittsgeschwindigkeiten entlang der Spur, um eine vorbestimmte Anzahl von Geschwindigkeitsprofilen unter Verwendung einer Clustering-Technik zu erhalten, wobei jedes Geschwindigkeitsprofil für jede jeweilige Spur mit derselben Epoche verbunden ist;
Erzeugen (560) eines Geschwindigkeitsprofils auf Fahrspur-Ebene für den Straßenabschnitt; und
Zurverfügungstellung (570) mindestens einer Navigationsanweisung oder einer autonomen Fahrzeugsteuerung auf der Grundlage des Fahrspur-Geschwindigkeitsprofils für den Straßenabschnitt.

9. Verfahren nach Anspruch 8, wobei die Clustering-Technik (550) einen k-Mittelwert-Clustering-Algorithmus umfasst, und wobei die vorbestimmte Anzahl von Geschwindigkeitsprofilen drei ist.

10. Verfahren nach Anspruch 8, ferner Folgendes umfassend:
Schichtung der Trajektorien der Vielzahl von Sondenvorrichtungen, die den Fahrspuren des Straßensegments zugeordnet sind, in eine Vielzahl von Epochen, wobei das Geschwindigkeitsprofil auf Fahrspur-Ebene für den Straßenabschnitt Geschwindigkeitsprofile auf Fahrspur-Ebene für jede der Vielzahl von Epochen umfasst.

11. Verfahren nach Anspruch 8, ferner Folgendes umfassend:
Erzeugen (560) eines Fahrspur-Geschwindigkeitsprofilstrangs, der eine Vielzahl von Straßenabschnitten umfasst, als Reaktion darauf, dass jedes der Vielzahl von Straßenabschnitten ein Fahrspur-Geschwindigkeitsprofil innerhalb einer vordefinierten Ähnlichkeit zueinander aufweist.

12. Verfahren nach Anspruch 11, ferner Folgendes umfassend:
Stratifizieren der Trajektorien der Vielzahl von Sondenvorrichtungen, die den Fahrspuren des Straßensegments zugeordnet sind, in eine Vielzahl von Epochen, wobei das Fahrspur-Geschwindigkeitsprofil für den Straßenabschnitt Fahrspur-Geschwindigkeitsprofile für jede der Vielzahl von Epochen umfasst, und wobei der Fahrspur-Geschwindigkeitsprofilstrang eine Vielzahl von Straßenabschnitten als Reaktion darauf umfasst, dass jedes der Vielzahl von Straßenabschnitten ein Fahrspur-Geschwindigkeitsprofil innerhalb einer vordefinierten Ähnlichkeit zueinander für dieselbe Epoche aufweist.

13. Verfahren nach Anspruch 8, wobei die Karten-Angleichung (520) der Vielzahl von Sondenvorrichtungen zu Fahrspuren eines Straßenabschnitts eines Straßennetzes, Folgendes umfasst:
Identifizieren eines Straßenabschnitts, der den Sondentrajektorien entspricht, basierend auf dem Breitengrad und Längengrad der Sondendatenpunkte der Sondentrajektorien;
Bestimmen einer seitlichen Position der Sondentrajektorien von einer Mittellinie des identifizierten Straßenabschnitts;
Clustern (550) der Sondentrajektorien gemäß den verfügbaren Fahrspuren des identifizierten Straßenabschnitts; und
Karten-Angleichung der geclusterten Trajektorien zu den verfügbaren Fahrspuren.

14. Verfahren nach Anspruch 8, wobei die Zurverfügungstellung (570) mindestens einer Navigationsanweisung oder einer autonomen Fahrzeugsteuerung auf der Grundlage des Fahrspur-Geschwindigkeitsprofils für den Straßenabschnitt, Folgendes umfasst:
Identifizieren einer gewünschten Geschwindigkeit für den Straßenabschnitt basierend auf dem Fahrtzweck eines Fahrzeugs;
Identifizieren einer Fahrspur des Straßenabschnitts, die der gewünschten Geschwindigkeit für das Straßensegment entspricht; und
Bereitstellen von Anweisungen, die die Fahrt eines Fahrzeugs auf der identifizierten Fahrspur steuern.

15. Computerprogrammprodukt, das Anweisungen enthält, die, wenn das Programm von einem Computer ausgeführt wird, den Computer veranlassen, das Verfahren nach einem der Ansprüche 8 bis 14 auszuführen.

## Revendications

1. Un système de cartographie (200) comprenant :
une mémoire (204) comprenant des données cartographiques ; et
un circuit de traitement (202) configuré pour :
recevoir une pluralité de points de données de sonde, chaque point de données de sonde reçu provenant d'un appareil de sonde d'une pluralité d'appareils de sonde, chaque appareil de sonde comprenant un ou plusieurs capteurs et étant à bord d'un véhicule respectif, dans lequel chaque point de données de sonde comprend des informations d'emplacement associées à l'appareil de sonde respectif, et dans lequel une séquence de points de données de sonde provenant d'un appareil de sonde respectif définit une trajectoire dudit appareil de sonde respectif ;
associer des trajectoires de la pluralité d'appareils de sonde à la carte de voies d'un segment de route d'un réseau routier ;
déterminer, à partir de chaque trajectoire de la pluralité d'appareils de sonde associée à la carte des voies du segment de route, une vitesse moyenne de trajet pour chaque trajectoire le long de chaque voie du segment de route ;
cumuler les vitesses de trajet moyennes le long de chaque voie du segment de route ;
pour chaque voie, regrouper les vitesses moyennes cumulées le long de la voie afin d'obtenir un nombre prédéterminé de profils de vitesse à l'aide d'une technique de regroupement, chaque profil de vitesse pour chaque voie respective étant associé à une même époque ;
générer un profil de vitesse au niveau de la voie pour le segment de route ; et
fournir pour au moins une parmi des instructions de navigation ou une commande de véhicule autonome sur la base du profil de vitesse au niveau de la voie pour le segment de route.

2. Système de cartographie (200) selon la revendication 1, comprenant en outre un circuit de traitement configuré pour :
stratifier les trajectoires de la pluralité d'appareils de sonde associées à la carte des voies du segment de route en une pluralité d'époques, dans lequel le profil de vitesse au niveau de la voie pour le segment de route comprend des profils de vitesse au niveau de la voie pour chacune de la pluralité d'époques.

3. Système de cartographie (200) selon la revendication 1, dans lequel le circuit de traitement est en outre configuré pour :
générer un brin de profil de vitesse au niveau de la voie comprenant une pluralité de segments de route en réponse à chacun de la pluralité de segments de route présentant un profil de vitesse au niveau de la voie au sein d'une similarité prédéfinie les uns des autres.

4. Système de cartographie (200) selon la revendication 1, dans lequel le circuit de traitement configuré pour associer les trajectoires de la pluralité d'appareils de sonde à la carte de voies d'un segment de route d'un réseau routier comprend un circuit de traitement configuré pour :
identifier un segment de route correspondant aux trajectoires de sonde sur la base de latitudes et de longitudes des points de données de sonde des trajectoires de sonde ;
déterminer une position latérale des trajectoires de sonde à partir d'un axe central du segment de route identifié ;
regrouper les trajectoires de sondes en fonction des voies disponibles du segment de route identifié ; et
associer les trajectoires groupées à la carte de voies disponibles.

5. Système de cartographie (200) selon la revendication 1, dans lequel la technique de regroupement comprend un algorithme de regroupement de k-moyennes, et dans lequel le nombre prédéterminé de profils de vitesse est de trois.

6. Système de cartographie (200) selon la revendication 3, comprenant en outre un circuit de traitement configuré pour :
stratifier les trajectoires de la pluralité d'appareils de sonde associées à la carte des voies du segment de route en une pluralité d'époques, dans lequel le profil de vitesse au niveau de la voie pour le segment de route comprend des profils de vitesse au niveau de la voie pour chacune de la pluralité d'époques, et dans lequel le brin de profil de vitesse au niveau de la voie comprend une pluralité de segments de route en réponse à chacun de la pluralité de segments de route présentant un profil de vitesse au niveau de la voie au sein d'une similarité prédéfinie les uns des autres.

7. Système de cartographie (200) selon la revendication 1, dans lequel le circuit de traitement configuré pour fournir pour au moins une parmi des instructions de navigation ou une commande de véhicule autonome sur la base du profil de vitesse au niveau de la voie pour le segment de route comprend un circuit de traitement configuré pour :
identifier une vitesse souhaitée pour le segment de route sur la base d'un but du déplacement d'un véhicule ;
identifier une voie du segment de route correspondant à la vitesse souhaitée pour le segment de route ; et
fournir des instructions dirigeant la circulation d'un véhicule dans la voie identifiée.

8. Procédé implémenté par ordinateur comprenant :
la réception (510) d'une pluralité de points de données de sonde, chaque point de données de sonde reçu provenant d'un appareil de sonde d'une pluralité d'appareils de sonde, chaque appareil de sonde comprenant un ou plusieurs capteurs et étant à bord d'un véhicule respectif, dans lequel chaque point de données de sonde comprend des informations d'emplacement associées à l'appareil de sonde respectif, et dans lequel une séquence de points de données de sonde provenant d'un appareil de sonde respectif définit une trajectoire dudit appareil de sonde respectif ;
l'association (520) de trajectoires de la pluralité d'appareils de sonde à la carte de voies d'un segment de route d'un réseau routier ;
la détermination (530), à partir de chaque trajectoire de la pluralité d'appareils de sonde associée à la carte des voies du segment de route, d'une vitesse moyenne de trajet pour chaque trajectoire le long de chaque voie du segment de route ;
le cumul (540) de vitesses de trajet moyennes le long de chaque voie du segment de route ;
pour chaque voie, le regoupement (550) des vitesses cumulées le long de la voie afin d'obtenir un nombre prédéterminé de profils de vitesse à l'aide d'une technique de regroupement, chaque profil de vitesse pour chaque voie respective étant associé à une même époque ;
la génération (560) d'un profil de vitesse au niveau de la voie pour le segment de route ; et
la fourniture (570) pour au moins une parmi des instructions de navigation ou une commande de véhicule autonome sur la base du profil de vitesse au niveau de la voie pour le segment de route.

9. Procédé selon la revendication 8, dans lequel la technique de regroupement (550) comprend un algorithme de regroupement de k-moyennes, et dans lequel le nombre prédéterminé de profils de vitesse est de trois.

10. Procédé selon la revendication 8, comprenant en outre :
le fait de stratifier les trajectoires de la pluralité d'appareils de sonde associées à la carte des voies du segment de route en une pluralité d'époques, dans lequel le profil de vitesse au niveau de la voie pour le segment de route comprend des profils de vitesse au niveau de la voie pour chacune de la pluralité d'époques.

11. Procédé selon la revendication 8, comprenant en outre :
la génération (560) d'un brin de profil de vitesse au niveau de la voie comprenant une pluralité de segments de route en réponse à chacun de la pluralité de segments de route présentant un profil de vitesse au niveau de la voie au sein d'une similarité prédéfinie les uns des autres.

12. Procédé selon la revendication 11, comprenant en outre :
le fait de stratifier les trajectoires de la pluralité d'appareils de sonde associées à la carte des voies du segment de route en une pluralité d'époques, dans lequel le profil de vitesse au niveau de la voie pour le segment de route comprend des profils de vitesse au niveau de la voie pour chacune de la pluralité d'époques, et dans lequel le brin de profil de vitesse au niveau de la voie comprend une pluralité de segments de route en réponse à chacun de la pluralité de segments de route présentant un profil de vitesse au niveau de la voie au sein d'une similarité prédéfinie les uns des autres pour la même époque.

13. Procédé selon la revendication 8, dans lequel l'association (520) de trajectoires de la pluralité d'appareils de sonde à la carte de voies d'un segment de route d'un réseau routier comprend :
l'identification d'un segment de route correspondant aux trajectoires de sonde sur la base de latitudes et de longitudes des points de données de sonde des trajectoires de sonde ;
la détermination d'une position latérale des trajectoires de sonde à partir d'un axe central du segment de route identifié ;
le regroupement (550) des trajectoires de sondes en fonction des voies disponibles du segment de route identifié ; et
l'association des trajectoires groupées à la carte de voies disponibles.

14. Procédé selon la revendication 8, dans lequel la fourniture (570) pour au moins une parmi des instructions de navigation ou une commande de véhicule autonome sur la base du profil de vitesse au niveau de la voie pour le segment de route comprend :
l'identification d'une vitesse souhaitée pour le segment de route sur la base d'un but du déplacement d'un véhicule ;
l'identification d'une voie du segment de route correspondant à la vitesse souhaitée pour le segment de route ; et
la fourniture d'instructions dirigeant la circulation d'un véhicule dans la voie identifiée.

15. Produit de programme informatique comprenant des instructions qui, lorsque le programme est exécuté par un ordinateur, amènent l'ordinateur à mettre en oeuvre le procédé selon l'une quelconque des revendications 8 à 14.
